# EUROPEAN PATENT APPLICATION

(11) **EP 4 760 574 A1**
(43) Date of publication of application: **17.06.2026**
(21) Application number: 24851577.7
(22) Date of filing: 22.07.2024
(51) Int. Cl.: G06F 21/62, G06F 21/60

(54) **CALCULATION METHOD, CALCULATION SYSTEM, CALCULATION PROGRAM, CALCULATION DEVICE, AND ENCRYPTION DEVICE**

(30) Priority: 07.08.2023 JP 2023128785
(71) Applicant: Acompany Co., Ltd., Nagoya-shi, Aichi 451-0042 (JP)
(72) Inventor: MAKINO Mitsuaki, Nagoya-shi, Aichi 451-0042 (JP); SAKURAI Ao, Nagoya-shi, Aichi 451-0042 (JP)
(74) Representative: Hasegawa, Kan
(86) International application number: PCT/JP2024/026094
(87) International publication number: WO 2025/033148

(57) **Abstract**

A computing method according to one embodiment is a computing method executed by a computing system including a first encryption apparatus, a second encryption apparatus, and a computing apparatus, the computing method comprising: a conversion step in which the first encryption apparatus converts first personal information into first de-identified processed information; an encryption step in which the first encryption apparatus encrypts the first de-identified processed information; a conversion step in which the second encryption apparatus converts second personal information into second de-identified processed information; an encryption step in which the second encryption apparatus encrypts the second de-identified processed information; an acquisition step in which the computing apparatus acquires encrypted first de-identified processed information and encrypted second de-identified processed information; a decryption step in which the computing apparatus decrypts the encrypted first de-identified processed information and the encrypted second de-identified processed information; a matching step in which the computing apparatus matches the decrypted first de-identified processed information and the decrypted second de-identified processed information; and a computing step in which the computing apparatus performs predetermined computing from the matched first de-identified processed information and the matched second de-identified processed information.

## Description

### [Technical Field]

The present invention relates to a computing method, a computing system, a computing program, a computing apparatus, and an encryption apparatus.

### [Background Art]

In recent years, privacy tech has been attracting attention. Non-Patent Document 1 proposes a method that enables utilization of personal information while protecting privacy by de-identifying personal information owned by a plurality of organizations and performing matching and processing using homomorphic encryption.

### [Citation List]

### [Non-Patent Literature]

Non-Patent Document 1: Kazuma Nozawa (and eight others), "Proposal and Evaluation of a Data Collaboration Method Suitable for Cross-Organizational Integration of Personal Data," Computer Security Symposium 2022, October 24, 2022.

### [Summary of Invention]

### [Problem to be Solved by the Invention]

In the above conventional technology, since secure computation is performed using homomorphic encryption, the risk of information leakage is low; however, the amount of computation increases, and an enormous amount of time is required for computation.

The present invention has been made in view of the above problem, and an object thereof is to enable high-speed computation while reducing the risk of information leakage.

### [Means for Solving the Problem]

A computing method according to one embodiment is a computing method executed by a computing system including a first encryption apparatus, a second encryption apparatus, and a computing apparatus, the computing method including: a conversion step in which the first encryption apparatus converts first personal information into first de-identified processed information; an encryption step in which the first encryption apparatus encrypts the first de-identified processed information; a conversion step in which the second encryption apparatus converts second personal information into second de-identified processed information; an encryption step in which the second encryption apparatus encrypts the second de-identified processed information; an acquisition step in which the computing apparatus acquires the encrypted first de-identified processed information and the encrypted second de-identified processed information; a decryption step in which the computing apparatus decrypts the encrypted first de-identified processed information and the encrypted second de-identified processed information; a matching step in which the computing apparatus matches the decrypted first de-identified processed information and the decrypted second de-identified processed information; and a computing step in which the computing apparatus performs predetermined computing from the matched first de-identified processed information and the matched second de-identified processed information.

### [Advantageous Effects of Invention]

According to one embodiment, it is possible to perform computing at high speed while reducing the risk of information leakage.

### [Brief Description of the Drawings]

FIG. 1 is a diagram illustrating an example of a configuration of a computing system 1000.
FIG. 2 is a diagram illustrating an example of a hardware configuration of a computing apparatus 1.
FIG. 3 is a diagram illustrating an example of a hardware configuration of an encryption apparatus 2.
FIG. 4 is a diagram illustrating an example of a hardware configuration of a user terminal 3.
FIG. 5 is a diagram illustrating an example of a functional configuration of the computing apparatus 1.
FIG. 6 is a diagram illustrating an example of a functional configuration of the encryption apparatus 2.
FIG. 7 is a diagram illustrating an example of personal information 221.
FIG. 8 is a diagram illustrating an example of de-identified processed information 222.
FIG. 9 is a diagram illustrating an example of a functional configuration of the user terminal 3.
FIG. 10 is a flowchart illustrating an example of processing executed by the computing system 1000.
FIG. 11 is a schematic diagram illustrating an example of processing executed by the computing system 1000.

### [Description of Embodiments]

Hereinafter, embodiments of the present invention will be described with reference to the accompanying drawings. Note that, regarding the description of the specification and drawings according to the respective embodiments, constituent elements having substantially the same functional configuration are denoted by the same reference signs, thereby omitting redundant description.

First, an outline of the computing system 1000 according to the present embodiment will be described. The computing system 1000 is a system that, after converting personal data owned by a plurality of owners into de-identified processed information, matches the de-identified processed information to enable lawful use of the entirety of the personal data owned by the plurality of owners.

The personal data is personal information constituting a personal information database.

The personal information database is a collection of information including personal information, systematically configured so that specific personal information can be searched.

The personal information is information regarding a living individual, and is information that can identify a specific individual based on a name, date of birth, and other descriptions included in the information. The personal information includes identification information and attribute information.

The identification information is information for identifying an individual. The identification information is, for example, a name, an e-mail address, or a face image, but is not limited thereto. The personal information may include a plurality of pieces of identification information.

The attribute information is information indicating attributes of an individual. The attribute information is, for example, age, gender, address, occupation, or purchased product, but is not limited thereto. The personal information may include a plurality of pieces of attribute information.

The de-identified processed information is information obtained by de-identifying personal information. The de-identified processed information is personal information or non-personal information. The de-identified processed information that is personal information is, for example, pseudonymized information. The de-identified processed information that is non-personal information is, for example, pseudonymized information, anonymized information, information related to personal information, or other non-personal information.

The pseudonymized information is information regarding an individual obtained by processing personal information so as not to be able to identify a specific individual unless collated with other information.

The anonymized information is information regarding an individual obtained by processing personal information so as not to be able to identify a specific individual, and is information in which restoration of the personal information is made impossible.

The information related to personal information is information regarding a living individual that does not fall under any of personal information, pseudonymized information, and anonymized information.

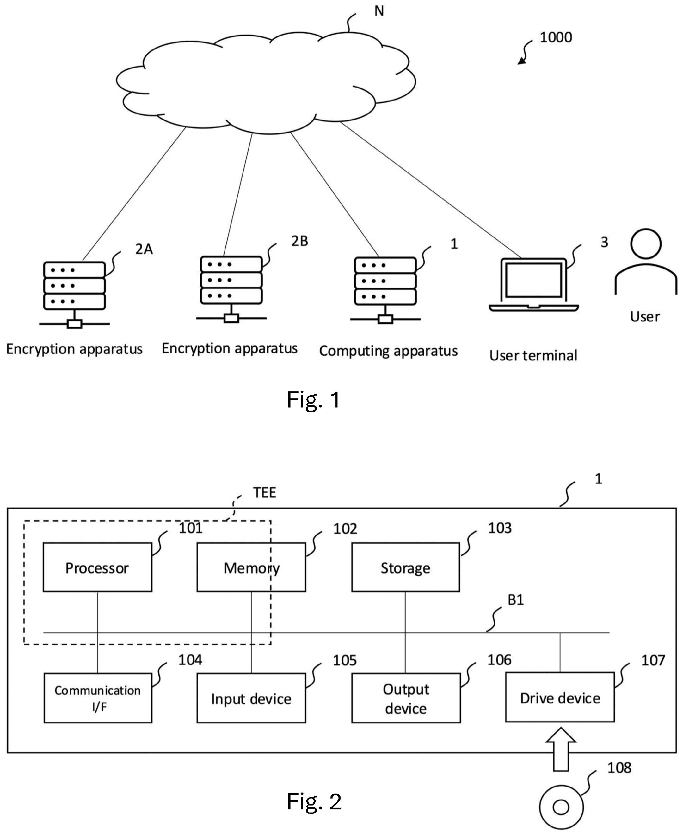

FIG. 1 is a diagram illustrating an example of a configuration of the computing system 1000. As illustrated in FIG. 1, the computing system 1000 includes a computing apparatus 1, an encryption apparatus 2A, an encryption apparatus 2B, and a user terminal 3 that are connected so as to be able to communicate with each other via a network N. Hereinafter, the encryption apparatuses 2A and 2B may be collectively referred to as the encryption apparatus 2. The network N is, for example, a wired LAN (Local Area Network), a wireless LAN, the Internet, a public line network, a mobile data communication network, or a combination thereof. In the example of FIG. 1, the computing system 1000 includes one computing apparatus 1 and one user terminal 3; however, the computing system 1000 may include a plurality of computing apparatuses 1 and a plurality of user terminals 3. Further, in the example of FIG. 1, the computing system 1000 includes two encryption apparatuses 2; however, the computing system 1000 may include one encryption apparatus 2 or three or more encryption apparatuses 2.

The computing apparatus 1 is an information processing apparatus that executes secure computation using de-identified processed information. The computing apparatus 1 is, for example, a PC (Personal Computer), a smartphone, a tablet terminal, a server apparatus, or a microcomputer, but is not limited thereto. The computing apparatus 1 includes a TEE (Trusted Execution Environment).

The TEE is a type of HIEE (Hardware-assisted Isolated Execution Environment) and is secure computation technology in a broad sense. More specifically, the TEE is a program execution environment protected by hardware and can execute computation without leaking data to the outside. The TEE is configured, for example, by a CPU (Central Processing Unit), a protected area (Enclave) generated in a RAM (Random Access Memory), and a communication path between the CPU and the protected area. Alternatively, the TEE may be configured by a CPU, a RAM designed in its entirety as a protected area, and a communication path between the CPU and the protected area.

The encryption apparatus 2 is an information processing apparatus that converts personal information into de-identified processed information and transmits the de-identified processed information to the computing apparatus 1. The encryption apparatus 2 is, for example, a PC, a smartphone, a tablet terminal, a server apparatus, or a microcomputer, but is not limited thereto. The encryption apparatus 2A corresponds to the first encryption apparatus in the claims, and the encryption apparatus 2B corresponds to the second encryption apparatus in the claims.

The user terminal 3 is an information processing apparatus used by a user of the computing system 1000. The user is, for example, an owner of personal information, but is not limited thereto. The user terminal 3 is, for example, a PC, a smartphone, or a tablet terminal, but is not limited thereto. The user terminal 3 may function as the encryption apparatus 2.

### <Hardware Configuration of Computing Apparatus 1>

Next, a hardware configuration of the computing apparatus 1 will be described. FIG. 2 is a diagram illustrating an example of a hardware configuration of the computing apparatus 1. As illustrated in FIG. 2, the computing apparatus 1 includes a processor 101, a memory 102, a storage 103, a communication I/F 104, an input device 105, an output device 106, and a drive device 107 that are connected to each other via a bus B1.

The processor 101 controls each component of the computing apparatus 1 and implements functions of the computing apparatus 1 by developing various programs including an OS (Operating System) and a computing program stored in the storage 103 into the memory 102 and executing the programs. The processor 101 is, for example, a CPU, an MPU (Micro Processing Unit), a GPU (Graphics Processing Unit), an ASIC (Application Specific Integrated Circuit), or a DSP (Digital Signal Processor), but is not limited thereto.

The memory 102 is, for example, a ROM (Read Only Memory), a RAM, or a combination thereof. The ROM is, for example, a PROM (Programmable ROM), an EPROM (Erasable Programmable ROM), an EEPROM (Electrically Erasable Programmable ROM), or a combination thereof. The RAM is, for example, a DRAM (Dynamic RAM) or an SRAM (Static RAM), but is not limited thereto.

In the example of FIG. 2, the TEE is configured by the processor 101 (CPU), a part of the bus B1, and a part of the memory 102 (RAM). However, as described above, the TEE may be configured by the processor 101, the bus B1, and the entirety of the memory 102.

The storage 103 stores various programs including an OS and a computing program and data. The storage 103 is, for example, a flash memory, an HDD (Hard Disk Drive), an SSD (Solid State Drive), or an SCM (Storage Class Memories), but is not limited thereto.

The communication I/F 104 is an interface for connecting the computing apparatus 1 to an external apparatus via the network N and controlling communication. The communication I/F 104 is, for example, Bluetooth (registered trademark), Wi-Fi (registered trademark), ZigBee (registered trademark), or Ethernet (registered trademark), but is not limited thereto.

The input device 105 is a device for inputting information to the computing apparatus 1. The input device 105 is, for example, a mouse, a keyboard, a touch panel, a microphone, a scanner, an imaging device (camera), various sensors, or operation buttons, but is not limited thereto.

The output device 106 is a device for outputting information from the computing apparatus 1. The output device 106 is, for example, a display device (display), a projector, a printer, a speaker, or a vibrator, but is not limited thereto.

The drive device 107 is a device that reads and writes data of a recording medium 108. The drive device 107 is, for example, a magnetic disk drive, an optical disk drive, a magneto-optical disk drive, or an SD card reader, but is not limited thereto. The recording medium 108 is, for example, a CD (Compact Disc), a DVD (Digital Versatile Disc), an FD (Floppy Disk), an MO (Magneto-Optical disk), a BD (Blu-ray (registered trademark) Disc), a USB (registered trademark) memory, or an SD card, but is not limited thereto.

In the present embodiment, the computing program may be written into the memory 102 or the storage 103 at the manufacturing stage of the computing apparatus 1, may be provided to the computing apparatus 1 via the network N, or may be provided to the computing apparatus 1 via a non-transitory computer-readable recording medium such as the recording medium 108.

### <Hardware Configuration of Encryption Apparatus 2>

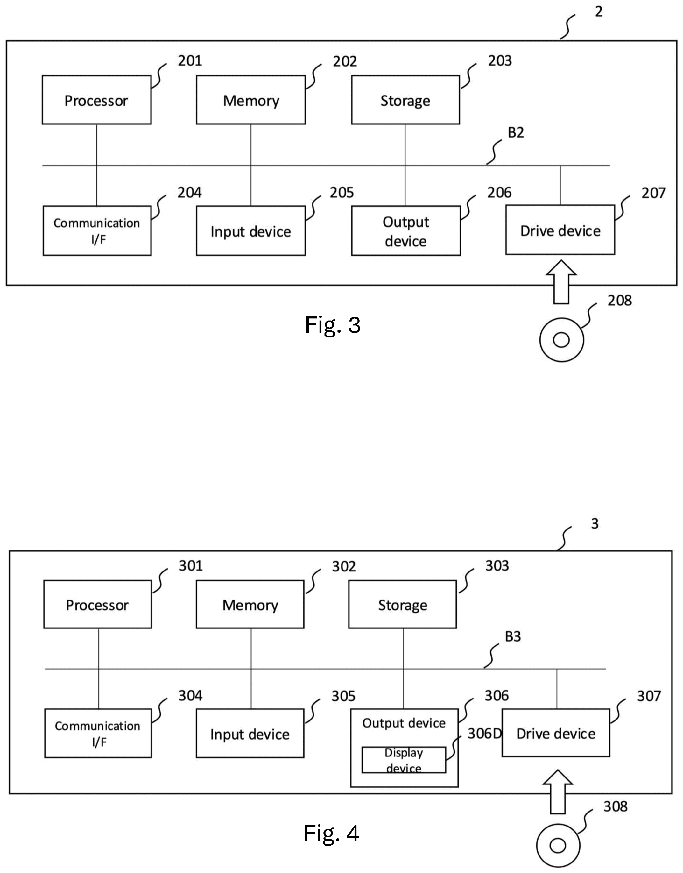

Next, a hardware configuration of the encryption apparatus 2 will be described. FIG. 3 is a diagram illustrating an example of a hardware configuration of the encryption apparatus 2. As illustrated in FIG. 3, the encryption apparatus 2 includes a processor 201, a memory 202, a storage 203, a communication I/F 204, an input device 205, an output device 206, and a drive device 207 that are connected to each other via a bus B2.

The processor 201 controls each component of the encryption apparatus 2 and implements functions of the encryption apparatus 2 by developing various programs including an OS and a computing program stored in the storage 203 into the memory 202 and executing the programs. The processor 201 is, for example, a CPU, an MPU, a GPU, an ASIC, or a DSP, but is not limited thereto.

The memory 202 is, for example, a ROM, a RAM, or a combination thereof. The ROM is, for example, a PROM, an EPROM, an EEPROM, or a combination thereof. The RAM is, for example, a DRAM or an SRAM, but is not limited thereto.

The storage 203 stores various programs including an OS and a computing program and data. The storage 203 is, for example, a flash memory, an HDD, an SSD, or an SCM, but is not limited thereto.

The communication I/F 204 is an interface for connecting the encryption apparatus 2 to an external apparatus via the network N and controlling communication. The communication I/F 204 is, for example, Bluetooth (registered trademark), Wi-Fi (registered trademark), ZigBee (registered trademark), or Ethernet (registered trademark), but is not limited thereto.

The input device 205 is a device for inputting information to the encryption apparatus 2. The input device 205 is, for example, a mouse, a keyboard, a touch panel, a microphone, a scanner, an imaging device (camera), various sensors, or operation buttons, but is not limited thereto.

The output device 206 is a device for outputting information from the encryption apparatus 2. The output device 206 is, for example, a display device (display), a projector, a printer, a speaker, or a vibrator, but is not limited thereto.

The drive device 207 is a device that reads and writes data of a recording medium 208. The drive device 207 is, for example, a magnetic disk drive, an optical disk drive, a magneto-optical disk drive, or an SD card reader, but is not limited thereto. The recording medium 208 is, for example, a CD, a DVD, an FD, an MO, a BD (Blu-ray (registered trademark) Disc), a USB (registered trademark) memory, or an SD card, but is not limited thereto.

In the present embodiment, the computing program may be written into the memory 202 or the storage 203 at the manufacturing stage of the encryption apparatus 2, may be provided to the encryption apparatus 2 via the network N, or may be provided to the encryption apparatus 2 via a non-transitory computer-readable recording medium such as the recording medium 208.

### <Hardware Configuration of User Terminal 3>

Next, a hardware configuration of the user terminal 3 will be described. FIG. 4 is a diagram illustrating an example of a hardware configuration of the user terminal 3. As illustrated in FIG. 4, the user terminal 3 includes a processor 301, a memory 302, a storage 303, a communication I/F 304, an input device 305, an output device 306, and a drive device 307 that are connected to each other via a bus B3.

The processor 301 controls each component of the user terminal 3 and implements functions of the user terminal 3 by developing various programs including an OS and a computing program stored in the storage 303 into the memory 302 and executing the programs. The processor 301 is, for example, a CPU, an MPU, a GPU, an ASIC, or a DSP, but is not limited thereto.

The memory 302 is, for example, a ROM, a RAM, or a combination thereof. The ROM is, for example, a PROM, an EPROM, an EEPROM, or a combination thereof. The RAM is, for example, a DRAM or an SRAM, but is not limited thereto.

The storage 303 stores various programs including an OS and a computing program and data. The storage 303 is, for example, a flash memory, an HDD, an SSD, or an SCM, but is not limited thereto.

The communication I/F 304 is an interface for connecting the user terminal 3 to an external apparatus via the network N and controlling communication. The communication I/F 304 is, for example, Bluetooth (registered trademark), Wi-Fi (registered trademark), ZigBee (registered trademark), or Ethernet (registered trademark), but is not limited thereto.

The input device 305 is a device for inputting information to the user terminal 3. The input device 305 is, for example, a mouse, a keyboard, a touch panel, a microphone, a scanner, an imaging device (camera), various sensors, or operation buttons, but is not limited thereto.

The output device 306 is a device for outputting information from the user terminal 3. The output device 306 is, for example, a display device (display), a projector, a printer, a speaker, or a vibrator, but is not limited thereto. The user terminal 3 includes a display device 306D as the output device 306.

The drive device 307 is a device that reads and writes data of a recording medium 308. The drive device 307 is, for example, a magnetic disk drive, an optical disk drive, a magneto-optical disk drive, or an SD card reader, but is not limited thereto. The recording medium 308 is, for example, a CD, a DVD, an FD, an MO, a BD (Blu-ray (registered trademark) Disc), a USB (registered trademark) memory, or an SD card, but is not limited thereto.

In the present embodiment, the computing program may be written into the memory 302 or the storage 303 at the manufacturing stage of the user terminal 3, may be provided to the user terminal 3 via the network N, or may be provided to the user terminal 3 via a non-transitory computer-readable recording medium such as the recording medium 308.

### <Functional Configuration of Computing Apparatus 1>

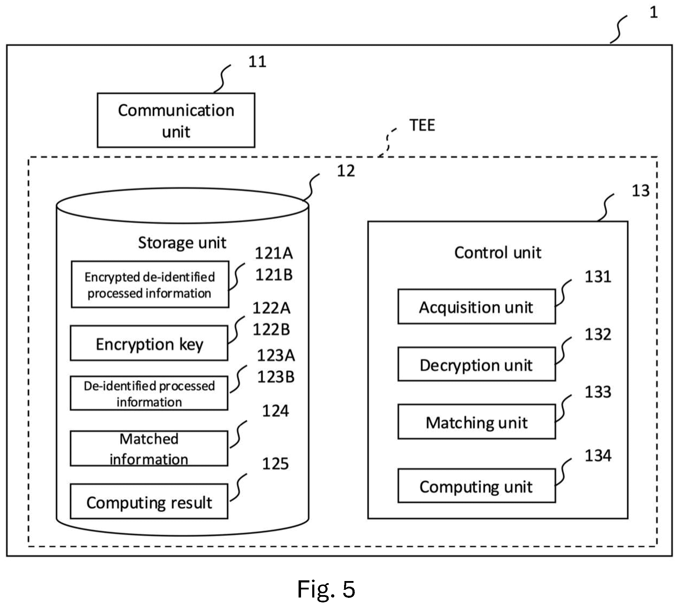

Next, a functional configuration of the computing apparatus 1 will be described. FIG. 5 is a diagram illustrating an example of a functional configuration of the computing apparatus 1. As illustrated in FIG. 5, the computing apparatus 1 includes a communication unit 11, a storage unit 12, and a control unit 13.

The communication unit 11 is implemented by the communication I/F 104. The communication unit 11 transmits and receives information to and from the encryption apparatus 2 and the user terminal 3 via the network N. The communication unit 11 receives encrypted de-identified processed information from the encryption apparatus 2 and transmits a computing result to the user terminal 3.

The storage unit 12 is implemented by the memory 102 and the storage 103. A protected area constituting the TEE in the storage unit 12 stores encrypted de-identified processed information 121A and 121B, encryption keys 122A and 122B, de-identified processed information 123A and 123B, matched information 124, and a computing result 125. Hereinafter, the encrypted de-identified processed information 121A and 121B, the encryption keys 122A and 122B, and the de-identified processed information 123A and 123B may be collectively referred to as encrypted de-identified processed information 121, encryption keys 122, and de-identified processed information 123, respectively.

The encrypted de-identified processed information 121 is de-identified processed information encrypted by the encryption apparatus 2. The encrypted de-identified processed information 121A is de-identified processed information encrypted by the encryption apparatus 2A, and the encrypted de-identified processed information 121B is de-identified processed information encrypted by the encryption apparatus 2B.

The encryption keys 122 are encryption keys for decrypting the encrypted de-identified processed information 121. The encryption key 122A is an encryption key for decrypting the encrypted de-identified processed information 121A, and the encryption key 122B is an encryption key for decrypting the encrypted de-identified processed information 121B. The encryption keys 122 may be symmetric keys of a symmetric-key cryptosystem such as AES, or may be private keys of a public-key cryptosystem such as RSA. Further, the encryption keys 122A and 122B may be a common encryption key or may be different encryption keys.

The de-identified processed information 123 is de-identified processed information obtained by decrypting the encrypted de-identified processed information 121 with the encryption keys 122. The de-identified processed information 123A is de-identified processed information obtained by decrypting the encrypted de-identified processed information 121A with the encryption key 122A, and corresponds to the first de-identified processed information in the claims. The de-identified processed information 123B is de-identified processed information obtained by decrypting the encrypted de-identified processed information 121B with the encryption key 122B, and corresponds to the second de-identified processed information in the claims.

The matched information 124 is obtained by matching the de-identified processed information 123A and the de-identified processed information 123B and combining them into one.

The computing result 125 is information indicating a result of performing predetermined computing from the matched information 124. The computing result 125 is, for example, an aggregation result for each attribute, a causal relationship between attributes, a correlation relationship between attributes, a record duplication count, a statistical analysis result (sum, average, variance, median, frequency, etc.), a machine learning model (parameters) trained using the matched information 124, or an inference result by a machine learning model, but is not limited thereto.

The control unit 13 is implemented by the processor 101 reading a program from the memory 102 and executing the program in cooperation with other hardware configurations. The control unit 13 controls overall operation of the computing apparatus 1. The control unit 13 includes an acquisition unit 131, a decryption unit 132, a matching unit 133, and a computing unit 134.

The acquisition unit 131 acquires encrypted de-identified processed information from the encryption apparatus 2 and stores the encrypted de-identified processed information in the storage unit 12 as encrypted de-identified processed information 121.

The decryption unit 132 decrypts the encrypted de-identified processed information 121 using the encryption keys 122 and stores the obtained de-identified processed information in the storage unit 12 as de-identified processed information 123.

The matching unit 133 matches the de-identified processed information 123A and the de-identified processed information 123B and stores the obtained matched information 124 in the storage unit 12.

The computing unit 134 executes predetermined computing on the matched information 124 and stores the obtained computing result in the storage unit 12 as the computing result 125.

Note that the functional configuration of the computing apparatus 1 is not limited to the above example. For example, the computing apparatus 1 may include functional configurations other than those described above.

### <Functional Configurations of Encryption Apparatuses 2A and 2B>

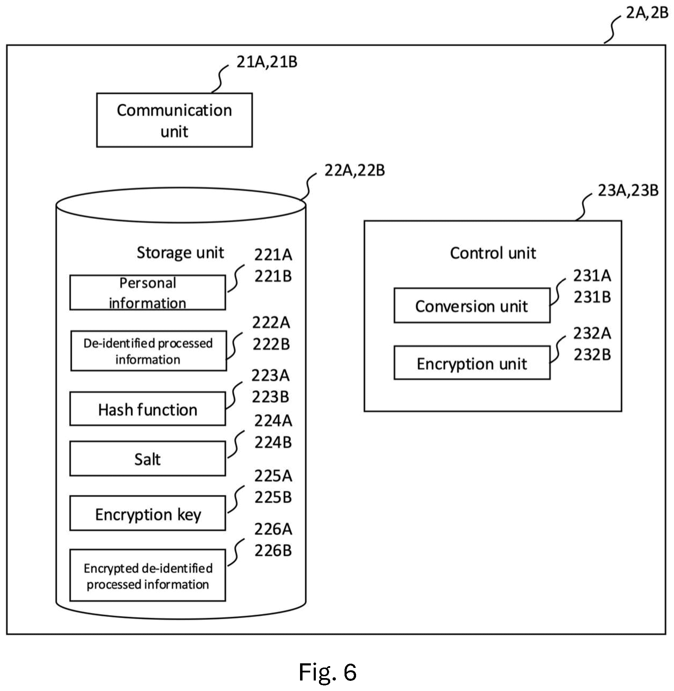

Next, functional configurations of the encryption apparatuses 2A and 2B will be described. FIG. 6 is a diagram illustrating an example of functional configurations of the encryption apparatuses 2A and 2B. As illustrated in FIG. 6, the encryption apparatuses 2A and 2B include communication units 21A and 21B, storage units 22A and 22B, and control units 23A and 23B, respectively. Hereinafter, the communication units 21A and 21B, the storage units 22A and 22B, and the control units 23A and 23B may be collectively referred to as a communication unit 21, a storage unit 22, and a control unit 23, respectively.

The communication unit 21 is implemented by the communication I/F 204. The communication unit 21 transmits and receives information to and from the computing apparatus 1 via the network N. The communication units 21A and 21B transmit encrypted personal information 221A and 221B to the computing apparatus 1, respectively.

The storage unit 22 is implemented by the memory 202 and the storage 203. The storage units 22A and 22B store personal information 221A and 221B, de-identified processed information 222A and 222B, hash functions 223A and 223B, salts 224A and 224B, encryption keys 225A and 225B, and encrypted de-identified processed information 226A and 226B, respectively.

The personal information 221 is personal data and includes identification information and attribute information. The personal information 221A corresponds to the first personal information in the claims, and the personal information 221B corresponds to the second personal information in the claims. The personal information 221A and the personal information 221B are personal information owned by different owners.

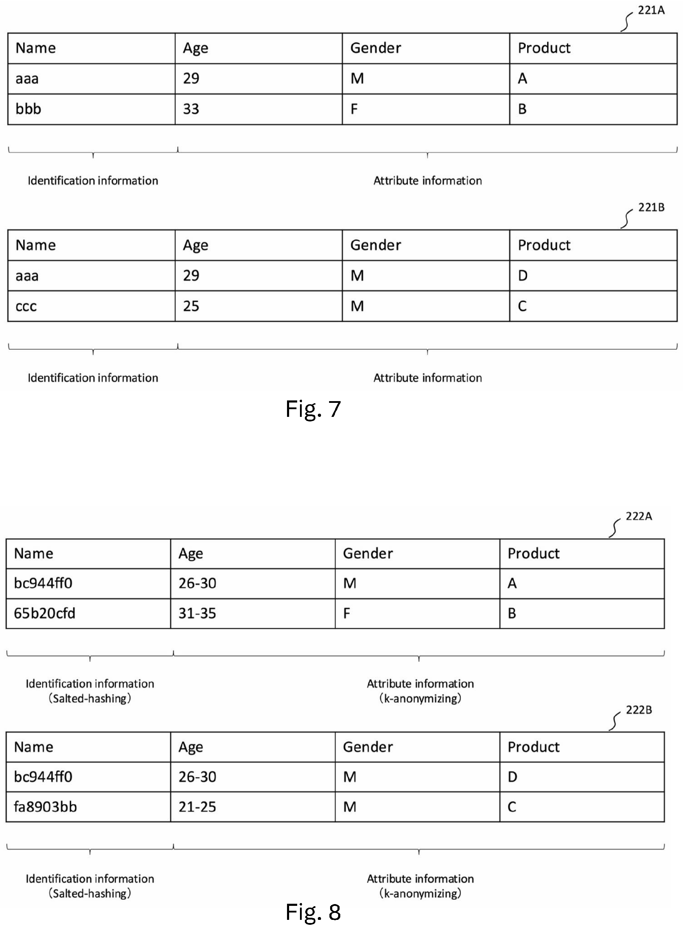

FIG. 7 is a diagram illustrating an example of the personal information 221A and 221B. The personal information 221A and 221B in FIG. 7 include "name," "age," "gender," and "product" as information items. The "name" is information indicating a name of an individual. The "name" corresponds to identification information. The "age" is information indicating an age of an individual. The "age" corresponds to attribute information. The "gender" is information indicating a gender of an individual. The "gender" corresponds to attribute information. The "product" is information indicating a purchased product of an individual.

Note that the personal information 221 is not limited to the example of FIG. 7. The personal information 221 may not include some of the above information items, or may include information items other than those described above.

The de-identified processed information 222 is de-identified processed information obtained by converting the personal information 221, and includes salted-hashed identification information and k-anonymized attribute information. The de-identified processed information 222A is obtained by converting the personal information 221A and corresponds to the first de-identified processed information in the claims. The de-identified processed information 222B is obtained by converting the personal information 221B and corresponds to the second de-identified processed information in the claims. Identification information of the personal information 221A and the personal information 221B is salted-hashed by the same method.

FIG. 8 is a diagram illustrating an example of the de-identified processed information 222A and 222B. The de-identified processed information 222A and 222B in FIG. 8 include "name," "age," "gender," and "product" as information items. The "name" is obtained by salted-hashing a name of an individual so as not to be able to identify the individual (hash value). Since identification information is salted-hashed by the same method, "aaa," which is a "name" common to the de-identified processed information 222A and 222B, has the same hash value. Thus, the computing apparatus 1 can match the de-identified processed information 222A and 222B in a state where the individual cannot be identified. The "age" is obtained by k-anonymizing information indicating an age of an individual. The "gender" is obtained by k-anonymizing information indicating a gender of an individual. The "product" is obtained by k-anonymizing information indicating a purchased product of an individual.

The hash functions 223 are functions for salted-hashing identification information of the personal information 221. The hash functions 223A and 223B are common. The hash function 223 is, for example, sha256, but is not limited thereto.

The salts 224 are salts (noise) for salted-hashing identification information of the personal information 221. The salts 224A and 224B are common.

The encryption keys 225 are encryption keys for encrypting the de-identified processed information 222. The encryption key 225A is an encryption key for encrypting the de-identified processed information 222A, and the encryption key 225B is an encryption key for encrypting the de-identified processed information 222B. The encryption keys 225 may be symmetric keys of a symmetric-key cryptosystem such as AES, or may be public keys of a public-key cryptosystem such as RSA. When the encryption key 225 is a public key, the encryption key 225 is generated by the computing apparatus 1 from a private key (encryption key 122) and is shared with the encryption apparatus 2. Further, the encryption keys 225A and 225B may be a common encryption key or may be different encryption keys.

The encrypted de-identified processed information 226 is the de-identified processed information 222 encrypted by the encryption apparatus 2. The encrypted de-identified processed information 226A is the de-identified processed information 222A encrypted by the encryption apparatus 2A, and the encrypted de-identified processed information 226B is the de-identified processed information 222B encrypted by the encryption apparatus 2B.

The control unit 23 is implemented by the processor 201 reading a program from the memory 202 and executing the program in cooperation with other hardware configurations. The control unit 23 controls overall operation of the encryption apparatus 2. The control units 23A and 23B include conversion units 231A and 231B and encryption units 232A and 232B, respectively.

The conversion units 231A and 231B convert the personal information 221A and 221B into the de-identified processed information 222A and 222B, respectively, and store the de-identified processed information 222A and 222B in the storage units 22A and 22B, respectively. Specifically, the conversion units 231A and 231B salted-hash identification information of the personal information 221A and 221B, respectively, by using the hash functions 223A and 223B and the salts 224A and 224B, respectively. Further, the conversion units 231A and 231B k-anonymize attribute information of the personal information 221A and 221B, respectively.

The encryption units 232A and 232B encrypt the de-identified processed information 222A and 222B, respectively, to generate encrypted de-identified processed information 226A and 226B, and store the encrypted de-identified processed information 226A and 226B in the storage units 22A and 22B, respectively.

Note that the functional configurations of the encryption apparatuses 2A and 2B are not limited to the above example. For example, the encryption apparatuses 2A and 2B may include functional configurations other than those described above. Further, as described above, each functional configuration of the encryption apparatus 2 may be implemented by software, or may be implemented by hardware such as an IC chip, an SoC, an LSI, or a microcomputer.

### <Functional Configuration of User Terminal 3>

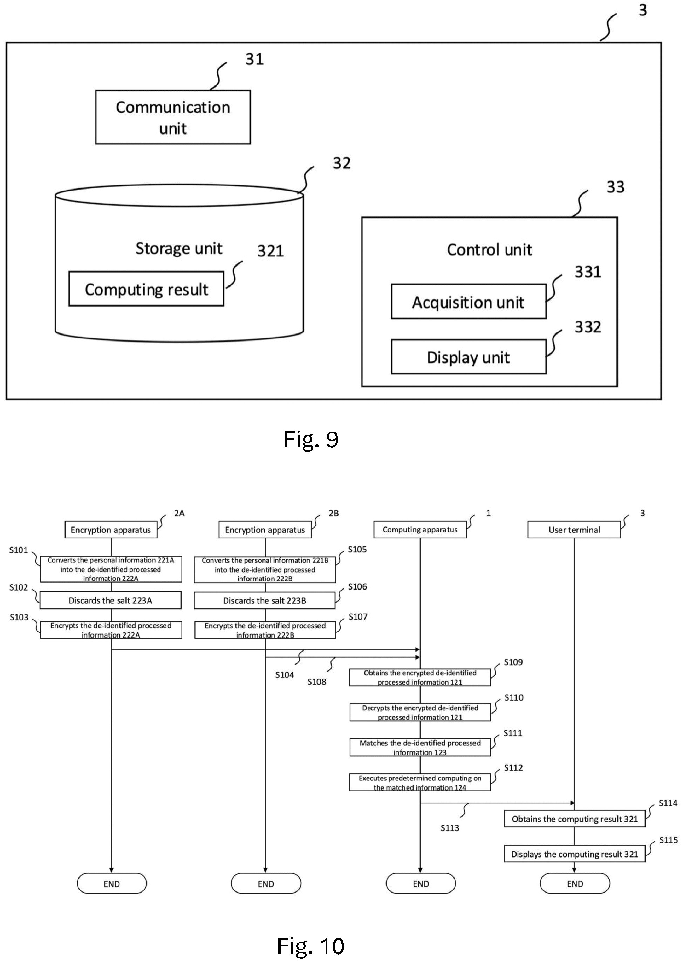

Next, a functional configuration of the user terminal 3 will be described. FIG. 9 is a diagram illustrating an example of a functional configuration of the user terminal 3. As illustrated in FIG. 9, the user terminal 3 includes a communication unit 31, a storage unit 32, and a control unit 33.

The communication unit 31 is implemented by the communication I/F 304. The communication unit 31 transmits and receives information to and from the computing apparatus 1 via the network N. The communication unit 31 receives the computing result 125 from the computing apparatus 1.

The storage unit 32 is implemented by the memory 302 and the storage 303. The storage unit 32 stores a computing result 321.

The computing result 321 is information indicating a result obtained by the computing apparatus 1 performing predetermined computing from the matched information 124. The computing result 321 includes an aggregation result for each attribute, a causal relationship between attributes, and a correlation relationship between attributes.

The control unit 33 is implemented by the processor 301 reading a program from the memory 302 and executing the program in cooperation with other hardware configurations. The control unit 33 controls overall operation of the user terminal 3. The control unit 33 includes an acquisition unit 331 and a display unit 332.

The acquisition unit 331 acquires the computing result 125 from the computing apparatus 1 and stores the computing result 125 in the storage unit 32 as the computing result 321.

The display unit 332 controls a screen displayed on the display device 306D. The display unit 332 displays the computing result 321 on the display device 306D in accordance with a user operation.

Note that the functional configuration of the user terminal 3 is not limited to the above example. For example, the user terminal 3 may include functional configurations other than those described above. Further, as described above, each functional configuration of the user terminal 3 may be implemented by software, or may be implemented by hardware such as an IC chip, an SoC, an LSI, or a microcomputer.

### <Processing Executed by Computing System 1000>

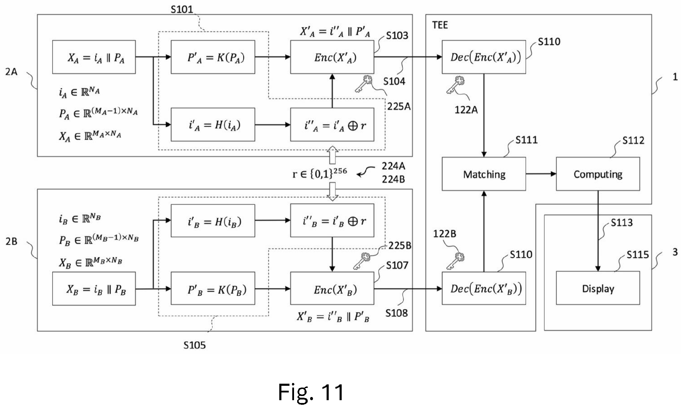

Next, processing executed by the computing system 1000 will be described. FIG. 10 is a flowchart illustrating an example of processing executed by the computing system 1000. FIG. 11 is a schematic diagram illustrating an example of processing executed by the computing system 1000.

In FIG. 11, XA is the personal information 221A (personal data) and is a matrix having MA columns and NA rows. IA is identification information and is a vector having NA rows. PA is attribute information and is a matrix having (MA-1) columns and NA rows. K is a k-anonymization algorithm. H is the hash function 223A. r is the salt 224A. XA' is the de-identified processed information 222A. Enc is an encryption algorithm. Enc(XA' ) is the encrypted de-identified processed information 226A.

Further, in FIG. 11, XB is the personal information 221B (personal data) and is a matrix having MB columns and NB rows. IB is identification information and is a vector having NB rows. PB is attribute information and is a matrix having (MB-1) columns and NB rows. K is a k-anonymization algorithm. H is the hash function 223B. r is the salt 224B. XB' is the de-identified processed information 222B. Enc is an encryption algorithm. Enc(XB' ) is the encrypted de-identified processed information 226B.

Further, in FIG. 11, Dec is a decryption algorithm. Dec(Enc(XA' )) is the de-identified processed information 123A. Dec(Enc(XB' )) is the de-identified processed information 123B.

### (Step S101)

First, the conversion unit 231A of the encryption apparatus 2A converts the personal information 221A into the de-identified processed information 222A by using the hash function 223A and the salt 224A (step S101).

Specifically, as illustrated in FIG. 11, the conversion unit 231A k-anonymizes attribute information PA (first attribute information) of the personal information 221A (K(PA)) and hashes identification information iA (first identification information) of the personal information 221A with the hash function 223A (H(iA)) and adds the salt 224A (iA' xor r). The conversion unit 231A may add the salt 224A to the identification information iA of the personal information 221A and hash the salt added information with the hash function 223A. When the hash function 223A is sha256, as illustrated in FIG. 11, the salt 224A is a 256-bit random number.

### (Step S102)

After storing the de-identified processed information 222A (XA' ) obtained by converting the personal information 221A (XA) in the storage unit 22A, the conversion unit 231A discards the salt 224A (step S102). Thus, the personal information 221A cannot be restored from the de-identified processed information 222A.

### (Step S103)

Next, the encryption unit 232A of the encryption apparatus 2A encrypts the de-identified processed information 222A (XA' ) using the encryption key 225A (step S103). The encryption unit 232A stores the encrypted de-identified processed information 226A (Enc(XA' )) obtained by encrypting the de-identified processed information 222A (XA' ) in the storage unit 22A.

### (Step S104)

Thereafter, the communication unit 21A of the encryption apparatus 2A transmits the encrypted de-identified processed information 226A (Enc(XB' )) to the computing apparatus 1 (step S104).

### (Step S105)

Similarly to the encryption apparatus 2A, the conversion unit 231B of the encryption apparatus 2B converts the personal information 221B into the de-identified processed information 222B by using the hash function 223B and the salt 224B (step S105).

Specifically, as illustrated in FIG. 11, the conversion unit 231B k-anonymizes attribute information PB (second attribute information) of the personal information 221B (K(PB)) and hashes identification information iB (second identification information) of the personal information 221B with the hash function 223B (H(iB)) and adds the salt 224B (iB' xor r). The conversion unit 231B may add the salt 224B to the identification information iB of the personal information 221B and hash the salt added information with the hash function 223B. When the hash function 223B is sha256, as illustrated in FIG. 11, the salt 224B is a 256-bit random number.

As described above, the hash functions 223A and 223B are common. Further, the salts 224A and 224B are common.

### (Step S106)

After storing the de-identified processed information 222B (XB' ) obtained by converting the personal information 221B (XB) in the storage unit 22B, the conversion unit 231B discards the salt 224B (step S106). Thus, the personal information 221B cannot be restored from the de-identified processed information 222B.

### (Step S107)

Next, the encryption unit 232B of the encryption apparatus 2B encrypts the de-identified processed information 222B (XB' ) using the encryption key 225B (step S107). The encryption unit 232B stores the encrypted de-identified processed information 226B (Enc(XB' )) obtained by encrypting the de-identified processed information 222B (XB' ) in the storage unit 22B. As described above, the encryption keys 225A and 225B may be common or may be different. Further, the encryption methods of the encryption unit 232A and the encryption unit 232B may be common or may be different.

### (Step S108)

Thereafter, the communication unit 21B of the encryption apparatus 2B transmits the encrypted de-identified processed information 226B (Enc(XB' )) to the computing apparatus 1 (step S108).

Note that steps S101 to S104 and steps S105 to S108 may be performed in reverse order. Further, when the computing system 1000 includes three or more encryption apparatuses 2, each encryption apparatus 2 may perform processing similar to steps S101 to S104. Thus, the computing apparatus 1 can acquire, in an encrypted state, de-identified processed information corresponding to personal information owned by a plurality of different owners.

### (Step S109)

Next, the acquisition unit 131 of the computing apparatus 1 acquires the encrypted de-identified processed information 226A received from the encryption apparatus 2A and stores the encrypted de-identified processed information 226A as encrypted de-identified processed information 121A in the protected area (TEE) of the storage unit 12 (step S109). Similarly, the acquisition unit 131 of the computing apparatus 1 acquires the encrypted de-identified processed information 226B received from the encryption apparatus 2B and stores the encrypted de-identified processed information 226B as encrypted de-identified processed information 121B in the protected area (TEE) of the storage unit 12 (step S109).

### (Step S110)

The decryption unit 132 decrypts the encrypted de-identified processed information 121A using the encryption key 122A corresponding to the encryption key 225A (step S110). The decryption unit 132 stores the de-identified processed information 123A obtained by decrypting the encrypted de-identified processed information 121A in the protected area (TEE) of the storage unit 12.

Similarly, the decryption unit 132 decrypts the encrypted de-identified processed information 121B using the encryption key 122B corresponding to the encryption key 225B (step S110). The decryption unit 132 stores the de-identified processed information 123B obtained by decrypting the encrypted de-identified processed information 121B in the protected area (TEE) of the storage unit 12.

### (Step S111)

The matching unit 133 matches the de-identified processed information 123A and the de-identified processed information 123B and stores the obtained matched information 124 in the protected area (TEE) of the storage unit 12 (step S111). As described above, since identification information of the de-identified processed information 123A and the de-identified processed information 123B is salted-hashed by the same method, the matching unit 133 can match the de-identified processed information 123A and the de-identified processed information 123B even in a state where an individual cannot be identified (see FIG. 8).

### (Step S112)

The computing unit 134 executes predetermined computing on the matched information 124 and stores the obtained computing result as the computing result 125 in the protected area (TEE) of the storage unit 12 (step S112).

### (Step S113)

Thereafter, the communication unit 11 of the computing apparatus 1 transmits the computing result 125 to the user terminal 3 (step S113). The computing apparatus 1 may transmit the computing result 125 as it is, or may transmit the computing result 125 after encrypting the computing result 125.

### (Step S114)

The acquisition unit 331 of the user terminal 3 acquires the computing result 125 received from the computing apparatus 1 and stores the computing result 125 as the computing result 321 in the storage unit 32 (step S114).

### (Step S115)

The display unit 332 displays the computing result 321 on the display device 206D in accordance with a user operation (step S115).

As described above, according to the present embodiment, a computing method is implemented that is executed by a computing system 1000 including an encryption apparatus 2A, an encryption apparatus 2B, and a computing apparatus 1, the computing method including: a conversion step in which the encryption apparatus 2A converts personal information 221A into de-identified processed information 222A; an encryption step in which the encryption apparatus 2A encrypts the de-identified processed information 222A; a conversion step in which the encryption apparatus 2B converts personal information 221B into de-identified processed information 222B; an encryption step in which the encryption apparatus 2B encrypts the de-identified processed information 222B; an acquisition step in which the computing apparatus 1 acquires encrypted de-identified processed information 226A and 226B; a decryption step in which the computing apparatus 1 decrypts encrypted de-identified processed information 121A and 121B; a matching step in which the computing apparatus 1 matches de-identified processed information 123A and 123B; and a computing step in which the computing apparatus 1 performs predetermined computing from matched information 124.

Thus, the computing system 1000 can execute computing on de-identified processed information in an unencrypted state while enhancing security of exchange of de-identified processed information between the computing apparatus 1 and the encryption apparatus 2. As a result, the computing system 1000 can perform computing on de-identified processed information at high speed while reducing the risk of information leakage of de-identified processed information.

Further, according to the present embodiment, the acquisition step S109, the decryption step S110, the matching step S111, and the computing step S112 are executed in the TEE of the computing apparatus 1. Thus, it is possible to further reduce the risk of information leakage of de-identified processed information.

The present embodiment includes the following disclosures.

### (Supplementary Note 1)

A computing method executed by a computing system including a first encryption apparatus, a second encryption apparatus, and a computing apparatus, the computing method including:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

### (Supplementary Note 2)

The computing method according to the claims, wherein the computing apparatus executes the acquisition step, the decryption step, the matching step, and the computing step in a TEE.

### (Supplementary Note 3)

The computing method according to the supplementary notes, wherein at least one of the first encryption apparatus and the second encryption apparatus executes the encryption step with a symmetric key, and the computing apparatus executes the decryption step with the symmetric key.

### (Supplementary Note 4)

The computing method according to the supplementary notes, wherein at least one of the first encryption apparatus and the second encryption apparatus executes the encryption step with a public key, and the computing apparatus executes the decryption step with a private key corresponding to the public key.

### (Supplementary Note 5)

The computing method according to the supplementary notes, wherein the first personal information includes first attribute information, the conversion step of the first encryption apparatus includes processing of k-anonymizing the first attribute information, the second personal information includes second attribute information, and the conversion step of the second encryption apparatus includes processing of k-anonymizing the second attribute information.

### (Supplementary Note 6)

The computing method according to the supplementary notes, wherein the first personal information includes first identification information, and the conversion step of the first encryption apparatus includes processing of hashing the first identification information and adding a salt.

### (Supplementary Note 7)

The computing method according to the supplementary notes, wherein the first personal information includes first identification information, and the conversion step of the first encryption apparatus includes processing of adding a salt to the first identification information and hashing the salt added information.

### (Supplementary Note 8)

The computing method according to Supplementary Note 6 or Supplementary Note 7, wherein the first encryption apparatus discards the salt after the conversion step.

### (Supplementary Note 9)

The computing method according to the supplementary notes, wherein the second personal information includes second identification information, and the conversion step of the second encryption apparatus includes processing of hashing the second identification information and adding a salt to the hashed information.

### (Supplementary Note 10)

The computing method according to Supplementary Note 1, wherein the second personal information includes second identification information, and the conversion step of the second encryption apparatus includes processing of adding a salt to the second identification information and hashing the salt added information.

### (Supplementary Note 11)

The computing method according to Supplementary Note 10 or Supplementary Note 11, wherein the second encryption apparatus discards the salt after the conversion step.

### (Supplementary Note 12)

The computing method according to Supplementary Note 1, wherein a hash function and a salt used by the first encryption apparatus and the second encryption apparatus in the conversion step are common.

### (Supplementary Note 13)

The computing method according to Supplementary Note 1, wherein the first de-identified processed information and the second de-identified processed information are pseudonymized information, anonymized information, information related to personal information, or non-personal information.

### (Supplementary Note 13)

A computing system including a first encryption apparatus, a second encryption apparatus, and a computing apparatus, the computing system executing the computing method including:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

### (Supplementary Note 14)

A computing program for causing a computing system including a first encryption apparatus, a second encryption apparatus, and a computing apparatus to execute a computing method including:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

### (Supplementary Note 15)

A computing apparatus that executes:
an acquisition step of acquiring encrypted first de-identified processed information and encrypted second de-identified processed information;
a decryption step of decrypting the encrypted first de-identified processed information and the encrypted second de-identified processed information;
a matching step of matching decrypted first de-identified processed information and decrypted second de-identified processed information; and
a computing step of performing predetermined computing from matched first de-identified processed information and matched second de-identified processed information.

### (Supplementary Note 16)

An encryption apparatus that executes:
a conversion step of converting personal information into de-identified processed information;
an encryption step of encrypting the de-identified processed information; and a transmission step of transmitting the encrypted de-identified processed information to a computing apparatus.

The embodiments disclosed herein are illustrative in all respects and shall be considered not restrictive. The scope of the present invention is defined not by the above-described meaning but by the claims, and is intended to include all modifications within the meaning and scope equivalent to the claims. Further, the present invention is not limited to the embodiments described above, and various modifications may be made within the scope described in the claims, and embodiments obtained by appropriately combining technical means disclosed in different embodiments are also included in the technical scope of the present invention.

### [Reference Signs List]

- 1:: Computing apparatus
- 2:: Encryption apparatus
- 3:: User terminal
- 11:: Communication unit
- 12:: Storage unit
- 13:: Control unit
- 121:: Encrypted de-identified processed information
- 122:: Encryption keys
- 123:: De-identified processed information
- 124:: Matched information
- 125:: Computing result
- 131:: Acquisition unit
- 132:: Decryption unit
- 133:: Matching unit
- 134:: Computing unit

## Claims

1. A computing method executed by a computing system including a first encryption apparatus, a second encryption apparatus, and a computing apparatus, the computing method comprising:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

2. The computing method according to claim 1, wherein the computing apparatus executes the acquisition step, the decryption step, the matching step, and the computing step in a TEE.

3. The computing method according to claim 1, wherein at least one of the first encryption apparatus and the second encryption apparatus executes the encryption step with a symmetric key, and the computing apparatus executes the decryption step with the symmetric key.

4. The computing method according to claim 1, wherein at least one of the first encryption apparatus and the second encryption apparatus executes the encryption step with a public key, and the computing apparatus executes the decryption step with a private key corresponding to the public key.

5. The computing method according to claim 1, wherein the first personal information includes first attribute information, the conversion step of the first encryption apparatus includes processing of k-anonymizing the first attribute information, the second personal information includes second attribute information, and the conversion step of the second encryption apparatus includes processing of k-anonymizing the second attribute information.

6. The computing method according to claim 1, wherein the first personal information includes first identification information, and the conversion step of the first encryption apparatus includes processing of hashing the first identification information and adding a salt.

7. The computing method according to claim 1, wherein the first personal information includes first identification information, and the conversion step of the first encryption apparatus includes processing of adding a salt to the first identification information and hashing the salt added information.

8. The computing method according to claim 6 or claim 7, wherein the first encryption apparatus discards the salt after the conversion step.

9. The computing method according to claim 1, wherein the second personal information includes second identification information, and the conversion step of the second encryption apparatus includes processing of hashing the second identification information and adding a salt to the hashed information.

10. The computing method according to claim 1, wherein the second personal information includes first identification information, and the conversion step of the second encryption apparatus includes processing of adding a salt to the second identification information and hashing the salt added information.

11. The computing method according to claim 10 or claim 11, wherein the second encryption apparatus discards the salt after the conversion step.

12. The computing method according to claim 1, wherein a hash function and a salt used by the first encryption apparatus and the second encryption apparatus in the conversion step are common.

13. The computing method according to claim 1, wherein the first de-identified processed information and the second de-identified processed information are pseudonymized information, anonymized information, information related to personal information, or non-personal information.

14. A computing system comprising a first encryption apparatus, a second encryption apparatus, and a computing apparatus, the computing system being configured to execute a computing method comprising:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

15. A computing program for causing a computing system including a first encryption apparatus, a second encryption apparatus, and a computing apparatus to execute a computing method comprising:
a conversion step in which the first encryption apparatus converts first personal information into first de-identified processed information;
an encryption step in which the first encryption apparatus encrypts the first de-identified processed information;
a conversion step in which the second encryption apparatus converts second personal information into second de-identified processed information;
an encryption step in which the second encryption apparatus encrypts the second de-identified processed information;
an acquisition step in which the computing apparatus acquires the encrypted first de-identified processed information and the encrypted second de-identified processed information;
a decryption step in which the computing apparatus decrypts the encrypted first de-identified processed information and the encrypted second de-identified processed information;
a matching step in which the computing apparatus matches the decrypted first de-identified processed information and the decrypted second de-identified processed information; and
a computing step in which the computing apparatus performs predetermined computing from the matched first de-identified processed information and the matched second de-identified processed information.

16. A computing apparatus that executes:
an acquisition step of acquiring encrypted first de-identified processed information and encrypted second de-identified processed information;
a decryption step of decrypting the encrypted first de-identified processed information and the encrypted second de-identified processed information;
a matching step of matching decrypted first de-identified processed information and decrypted second de-identified processed information; and
a computing step of performing predetermined computing from matched first de-identified processed information and matched second de-identified processed information.

17. An encryption apparatus that executes:
a conversion step of converting personal information into de-identified processed information;
an encryption step of encrypting the de-identified processed information; and
a transmission step of transmitting the encrypted de-identified processed information to a computing apparatus.
